# EUROPÄISCHE PATENTSCHRIFT

(11) **EP 1 158 197 B1**
(45) Veröffentlichungstag und Bekanntmachung des Hinweises auf die Patenterteilung: **19.10.2005**
(21) Anmeldenummer: 01107995.1
(22) Anmeldetag: 29.03.2001
(51) Int. Cl.: F16D 65/12

(54) **Befestigung für eine Bremsscheibe an einer Nabe**
Mounting of a brake disc to a hub
Fixation de disque de frein sur un moyeu

(30) Priorität: 20.05.2000 DE 10025102
(43) Veröffentlichungstag der Anmeldung: 28.11.2001
(73) Patentinhaber: BPW Bergische Achsen Kommanditgesellschaft, 51674 Wiehl (DE)
(72) Erfinder: Häussler, Harald, 71292 Friolzheim (DE); Pietsch, Helmut, 71254 Ditzingen (DE); Mertens, Carsten-Jörg, 71134 Aidlingen (DE)
(74) Vertreter: Christophersen & Partner

(56) Entgegenhaltungen:
- WO-A-00/09911
- DE-A- 2 039 003
- US-A- 3 861 501
- US-A- 5 437 351

## Beschreibung

Die Erfindung bezieht sich auf eine Bremseinrichtung mit mindestens einer auf einer Radnabe axial verschiebbaren Bremsscheibe nach dem Oberbegriff des Anspruchs 1.

Aus der DE 20 39 003 ist eine Scheibenbremse bekannt, die axial verschiebbar auf einer Radnabe angeordnet ist und radial wirkende Federn zwischen der Radnabe und der Bremsscheibe aufweisen, die aus hohlzylindrischen Stiften oder aus Blattfedern bestehen.

Aufgabe der Erfindung ist es, eine Bremseinrichtung mit mindestens einer auf einer Radnabe axial verschiebbaren Bremsscheibe mit zwischengeschalteten Federelementen zu schaffen, die in einfacher Weise montierbar sind und welche im Betrieb einen Spielausgleich sowie eine Geräuschdämpfung gewährleisten.

Diese Aufgabe wird erfindungsgemäß durch die Merkmale des Anspruchs 1 gelöst. Weitere vorteilhafte Merkmale beinhalten die Unteransprüche.

Jedes Federelement besteht vorzugsweise aus einem T-förmigen Gleitschuh mit vorragenden Schenkeln, welche in einem Luftführungskanal einer Bremsscheibe geklemmt gehalten sind, wobei ein die Schenkel verbindender Steg einem Zahnzwischenraum der Radnabe bzw. einer Zahnlücke der Bremsscheibe zugerichtet und zwischen der Radnabe und der Bremsscheibe über Federelemente eine Vorspannung erzeugt wird. Jedes Federelement ist derart gestaltet, daß ein Verklemmen im Luftführungskanal der Bremsscheibe einfach durchzuführen ist und zum anderen beim Verschieben der Bremsscheibe beim Bremsbetrieb ein Gleitsitz mit wenig Reibung erzielt wird.

Damit eine gleichmäßige Vorspannung der Bremsscheibe zur Radnabe gewährleistet ist, sind die Gleitschuhe gleichmäßig über den Umfang der Radnabe verteilt angeordnet. Insbesondere stehen sich jeweils zwei Gleitschuhe gegenüber.

Die Herstellung des Gleitschuhs bzw. des Federelements ist in einfacher Weise durchzuführen, da die mittig des Stegs angeordneten Schenkel aus einem einfachen Stanzteil zu einer U-Form abbiegbar sind.

Die freien Enden der Schenkel und die Seitenkanten des Steges weisen ausgerundete Abstützflächen auf, wobei sich die Schenkel über an den freien Enden vorgesehene Abstützflächen an inneren Wandungen, die in diesem Bereich radial schräg ausgebildet sind, des Luftführungskanals der Bremsscheibe und die Abstützflächen an den Seitenlängskanten des Stegs sich an benachbarten Zähnen der Bremsscheibe unter Vorspannung federnd abstützen.

Der Steg des Federelements ist nach einer ersten Ausführung der Erfindung einem Zahnzwischenraum der Radnabe zugerichtet und weist in Querrichtung eine gewölbte Fläche auf, die an den gegenüberliegenden vorzugsweise mit einem Radius versehenen Kanten der Zähne der Radnabe anliegt. Hierdurch wird in vorteilhafter Weise erreicht, daß der Steg des Federelements zu den Kanten des jeweils gegenüberstehenden Zahns der Radnabe nur eine Linienberührung aufweist, so daß beim axialen Verschieben der Bremsscheibe während des Bremsvorgangs nur eine geringe Reibung auftritt und der Bremsvorgang nicht behindert wird.

Aufgrund der Ausbildung des Federelements wird durch die Abstützung des Stegs über die Seitenlängskanten an der Bremsscheibe und des gewölbten Stegbodens an den Zähnen des Zahnzwischenraums der Radnabe eine entgegengerichtete Spannkraft aufgebaut.

Nach einer weiteren Ausführung der Erfindung kann der Steg auch eine gewölbte Fläche aufweisen, die der Zahnlücke der Bremsscheibe zugerichtet ist und nicht, wie nach dem weiteren Ausführungsbeispiel, dem Zahnzwischenraum der Radnabe zugerichtet ist. Hierdurch wird in vorteilhafter Weise ein Gleiten der seitlichen Abstützflächen des Stegs unmittelbar auf den Stirnflächen der Zähne der Radnabe erzielt, wodurch ebenfalls eine Verspannung zwischen Bremsscheibe und Radnabe erzielt wird, aber ein Gleiten auf den Kanten der Zähne vermieden wird.

Nach einer weiteren Ausführung kann das Federelement einen Steg mit endseitigen Abstützflächen an Zahnflanken der Bremsscheibe und zusätzlichen Abstützflächen an Zahnstirnseiten der Radnabe aufweisen, so daß eine optimale Verspannung zwischen Radnabe und Bremsscheibe erzielbar ist. Des weiteren ist zur exakten Führung der Bremsscheibe auf der Radnabe mit dem Steg ein zwischen die Zähne der Radnabe ragendes Abstützelement vorgesehen, das sich mit seinen Schenkeln an gegenüberliegenden Zahnflanken von Zähnen der Radnabe abstützt.

Ausführungsbeispiele der Erfindung sind in den Zeichnungen dargestellt und werden im Folgenden näher beschrieben.

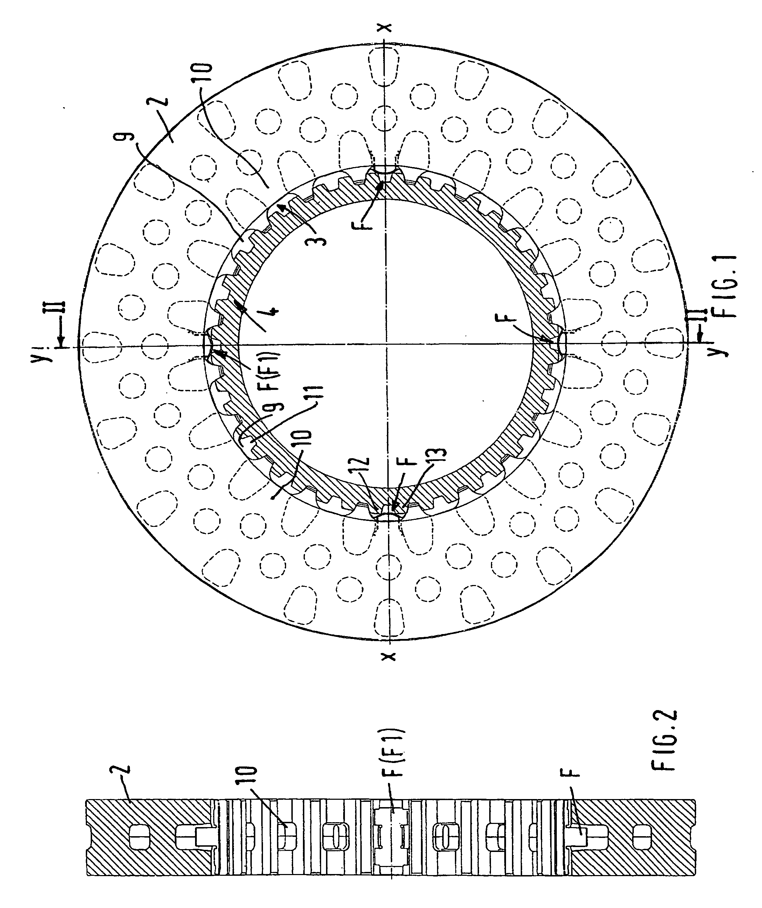

Es zeigen
- Fig. 1: eine Ansicht auf eine Bremsscheibe in Eingriff über eine Verzahnung mit einer Radnabe und zwischengesetzten Federelementen (Gleitschuhen),
- Fig. 2: einen Schnitt nach der Linie II-II der Fig. 1 durch die Bremsscheibe ohne Radnabe,
- Fig. 3: eine vergrößerte Darstellung der eingesetzten Federelemente bzw. Gleitschuhe,
- Fig. 4: eine weitere Ausführung eines Federelements bzw. Gleitschuhs,
- Fig. 5: eine schaubildliche Darstellung des Federelements bzw. Gleitschuhs gem. Fig. 3,
- Fig. 6: eine Draufsicht auf eine weitere Ausführungsform eines Federelements bzw. Gleitschuhs gemäß Fig. 5 und
- Fig. 7: eine weitere Ausführungsform eines Federelements bzw. Gleitschuhs mit angesetztem Abstützelement.

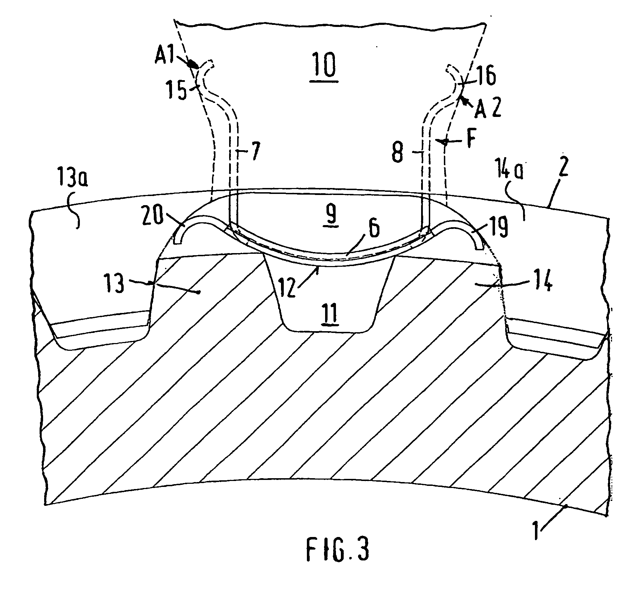

Eine Bremseinrichtung für ein Fahrzeug bzw. für ein Fahrzeuganhänger umfaßt eine auf einer Radnabe 1 axial verschiebbare Bremsscheibe 2. Hierzu weist die Bremsscheibe 2 eine Verzahnung 3 auf, die mit einer Verzahnung 4 der Radnabe 1 in Eingriff steht. Zwischen den Verzahnungen 3 und 4 der Bremsscheibe 2 und der Radnabe 1 sind mehrere Federelemente F; F1; F2 in Form von Gleitschuhen eingesetzt, die über den Umfang der Radnabe 1 verteilt angeordnet sind. Die Federelemente F; F1; F2 bestehen aus einem Gleitschuh mit von einem Steg 6; 6a; 6b vorragenden Schenkeln 7, 8, die in Zahnlücken 9 und Luftführungskanälen 10 der Bremsscheibe 2 hineinragen und den Gleitschuh klemmend halten. Dies ist insbesondere für den Montagezustand notwendig, in dem die Bremsscheibe 2 mit dem Gleitschuh noch nicht auf die Radnabe aufgeschoben ist. Der Steg 6 des Federelements F nach einer ersten Ausführung gem. Fig. 3 ist einem Zahnzwischenraum 11 der Radnabe 1 vorgespannt zugerichtet.

Die Federelemente F; F1; F2 sind derart verteilt über den Außenumfang der Radnabe 1 bzw. dem Innenumfang der Bremsscheibe 2 angeordnet, daß sich jeweils zwei Federelemente F; F1; F2 in einer Ebene X-X, Y-Y usw. gegenüberstehen.

Die Schenkel 7, 8 erstrecken sich im montierten Zustand etwa im rechten Winkel zum Steg 6; 6a; 6b und sind zueinander mit dem Maß a beabstandet und bilden mit dem Stegteil 6; 6a; 6b eine U-Form.

Der Steg 6 (Fig. 3) des Federelements F weist im Querschnitt eine konkav gewölbte Fläche 12 auf, die Zähnen 13, 14 der Radnabe 1 zugerichtet ist. Die freien Enden 15, 16 der Schenkel 7, 8 sowie Abschnittsbereiche 17, 18, 19 und 20 der Längskanten des Stegs 6 sind mit ausgerundeten Abstützflächen A1, A2 und A3 versehen, die sich an den Wandungen des Luftkanals 10 sowie in der Zahnlücke 9 an den Zähnen 13a, 14a der Bremsscheibe 2 unter Vorspannung federnd abstützen.

Wie in der Betriebsstellung gemäß Fig. 3 näher gezeigt, ist das Federelement F bzw. der Gleitschuh im Luftführungskanal 10 der Bremsscheibe 2 federnd gehalten und der Steg 6 stützt sich auf den Zähnen 13, 14 ab, wobei die Abschnittsbereiche 17, 18, 19 und 20 des Stegs 6 an den Seitenflanken der Zähne 13a, 14a der Bremsscheibe 2 anliegen. Bei einem Verschieben der Bremsscheibe verschiebt sich der Gleitschuh auf den Kanten der Zähne 13, 14 der Radnabe 1 mitsamt der Bremsscheibe 2.

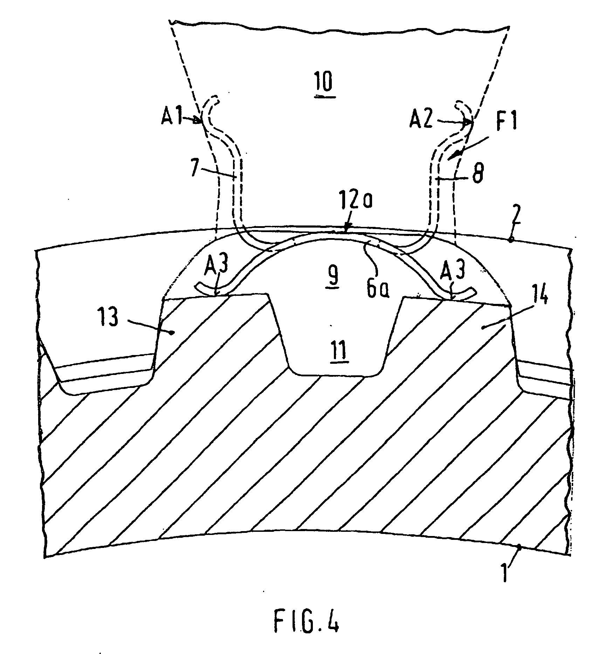

Nach einem weiteren Ausführungsbeispiel der Erfindung ist das Federelement F1 gemäß Fig. 4 mit dem Steg 6a versehen, welcher mit seiner im Querschnitt konkav gewölbten Fläche 12a der Zahnlücke 9 der Bremsscheibe 2 zugerichtet ist, wobei sich die Abstützflächen A3 des Stegs 6a auf den Stirnflächen der Zähne 13, 14 der Radnabe 1 abstützen, wodurch sich im Betrieb der Bremse die Abstützflächen A3 des Stegs 6a unmittelbar auf den Stirnflächen der Zähne 13, 14 der Radnabe 1 verschieben können.

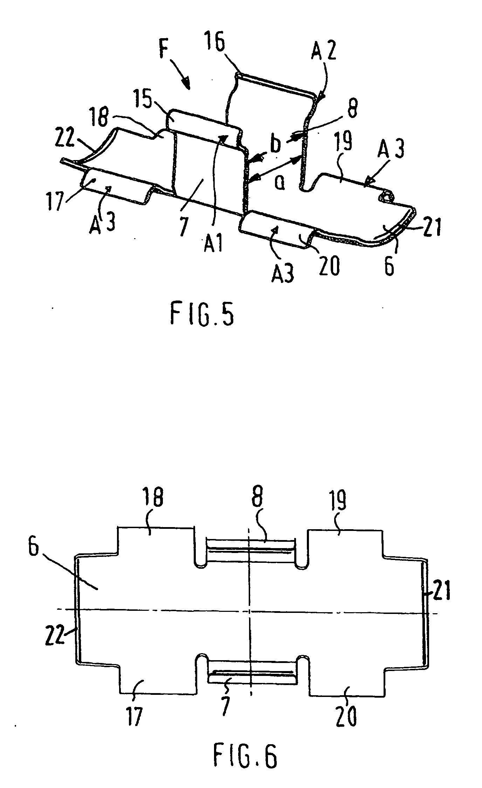

Der Gleitschuh in den Fig. 5 und 6 zeigt ein Ausführungsbeispiel im nicht montierten Zustand. Die Schenkel 7, 8 sind im oberen Bereich zueinander mit dem Maß b beanstandet, wobei das Maß b vorzugsweise größer ist, als das Maß a. Hier durch ergibt sich eine verbleibende Federkraft nach dem Einsetzen in die Bremsscheibe 2, wodurch der Gleitschuh bereits vor dem Aufsetzen auf die Radnabe 1 in der Bremsscheibe 2 gehalten wird. Die Endkanten 21, 22 des Steges 6; 6a sind, wie in Fig. 5 und 6 dargestellt, so nach oben hin rund auslaufend ausgebildet, daß die Endkanten 21 und 22 beim Aufsetzen der Bremsscheibe 2 auf die Radnabe 1 die äußeren Kanten der Zähne 13, 14 der Radnabe 1 übergreifen. Somit wird das Einfädeln und das Vorspannen der Gleitschuhe mit dem Aufsetzen der Bremsscheibe 2 auf die Radnabe 1 erzielt.

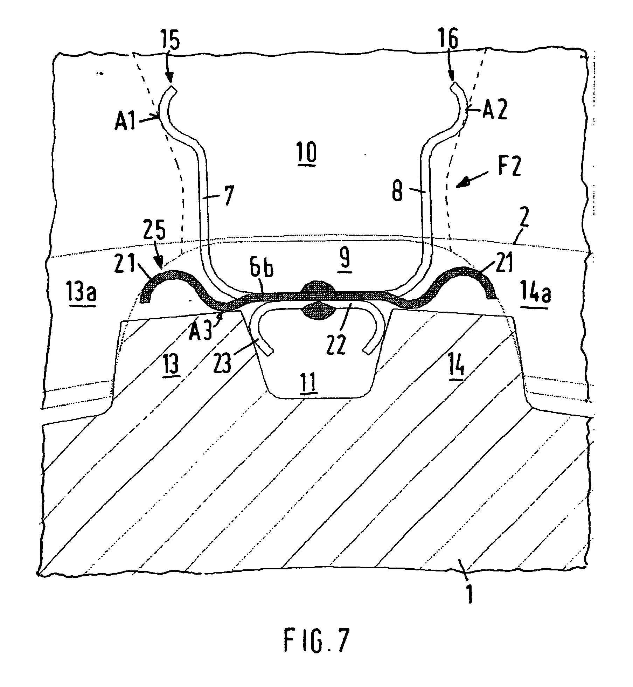

Eine weitere Ausführung eines Federelements F2 (Gleitschuh) gemäß Fig. 7 umfaßt einen Steg 6b der Abstützflächen A3 zu den Stirnseiten der Zähne 13, 14 der Radnabe 1 aufweist. An freien Enden 25 des Stegs 6b sind Ausrundungen 21 vorgesehen, die sich an Zahnflanken der Zähne 13a, 14a der Bremsscheibe 2 abstützen und an diesen beim Bremsvorgang entlanggleiten.

Mit dem Steg 6b ist mittig ein Abstützelement 22 beispielsweise durch eine Nietung verbunden. Dieses Abstützelement 22 ist im Querschnitt U-profilförmig ausgeführt und zwischen den Zähnen 13, 14 der Radnabe 1 angeordnet und weist zur Abstützung an gegenüberliegenden Zahnflanken der Zähne 13, 14 ausgerundete Schenkel 23 auf.

## Patentansprüche

1. Bremseinrichtung mit mindestens einer auf einer Radnabe (1) axial verschiebbaren Bremsscheibe (2), wobei die Bremsscheibe (2) eine Verzahnung (3) aufweist, die korrespondierend zu einer weiteren Verzahnung (4) der Radnabe (2) angeordnet ist und zwischen den Verzahnungen (3) der Bremsscheibe (2) jeweils eine Zahnlücke vorgesehen ist, in denen radial wirkende Federelemente (F; F1; F2) geklemmt gehalten sind, **dadurch gekennzeichnet, daß** die einzelnen Federelemente (F; F1; F2) aus einem Gleitschuh mit vorragenden Schenkeln (7, 8) bestehen die in die Zahnlücke (9) zwischen Zähnen (13a, 14a) der Bremsscheibe (2) in einem Luftführungskanal (10) geklemmt gehalten sind und ein die Schenkel (7, 8) verbindender Steg (6; 6a; 6b) einem Zahn-Zwischenraüm (11) der Radnabe (1) und/oder einer Zahnlücke (9) der Bremsscheibe (2) zugerichtet ist.

2. Bremseinrichtung nach Anspruch 1, **dadurch gekennzeichnet, daß** die Federelemente (F; F1; F2) am Außenumfang der Radnabe (1) bzw. am Innenumfang der Bremsscheibe (2) verteilt angeordnet sind, wobei sich jeweils zwei Federelemente (F; F1; F2) in einer Ebene (X-X, Y-Y) gegenüberstehen.

3. Bremseinrichtung nach den Ansprüchen 1 oder 2, **dadurch gekennzeichnet, daß** die Schenkel (7, 8) der Federelemente (F; F1; F2) etwa mittig zu dem Steg (6; 6a; 6b) angeordnet und zu diesem eine U-Form bildend abgewinkelt ausgebildet sind.

4. Bremseinrichtung nach den Ansprüchen 1, 2 oder 3, **dadurch gekennzeichnet, daß** die freien Enden (15, 16) der Schenkels (7, 8) und die Seitenlängskanten des Steges (6; 6a; 6b) ausgerundete Abstützflächen (A1, A2, A3) bilden, wobei sich die Schenkel (7, 8) über die Abstützflächen (A1, A2) an inneren Wandungen der Luftführungskanäle (10) der Bremsscheibe (2) und die Abstützflächen (A3) des Steges (6; 6a; 6b) an den benachbarten Zähnen (13a, 14a; 13, 14) der Bremsscheibe (2) bzw. der Radnabe (1) unter Spannung federnd abstützen.

5. Bremseinrichtung nach Anspruch 4, **dadurch gekennzeichnet, daß** die Luftführungskanäle (10) im Bereich der Abstützflächen (A1, A2) radial nach außen hin größerwerdend ausgebildet sind.

6. Bremseinrichtung nach den Ansprüchen 1, 2, 3, 4 oder 5 **dadurch gekennzeichnet, daß** der Steg (6) der Federelemente (F) eine dem Zahnzwischenraum (11) der Radnabe (1) zugerichtete und im Querschnitt konkav gewölbte Fläche (12) aufweist, die an den gegenüberliegenden Kanten der Verzahnung (13, 14) der Radnabe (1) anliegt.

7. Bremseinrichtung nach Anspruch 6, **dadurch gekennzeichnet, daß** die Kanten der Verzahnung (13,14) der Radnabe (1) mit einem Radius versehen sind.

8. Bremseinrichtung nach den Ansprüchen 1, 2, 3 oder 4, **dadurch gekennzeichnet, daß** der Steg (6a) der Federelemente (F1) konvex ausgebildet und in die Zahnlücke (9) der Bremsscheibe (1) hineinragt und dort an der Bremsscheibe (1) anliegt und an seinen Seitenkanten ausgerundete Abstützflächen (A3) aufweist.

9. Bremseinrichtung nach Anspruch 1 bis 7, **dadurch gekennzeichnet, daß** die Endkanten (21, 22) des Steges (6) nach oben hin abgerundet auslaufen.

10. Bremseinrichtung nach den Ansprüchen 1, 2, 3 oder 4, **dadurch gekennzeichnet, daß** der Steg (6b) der Federelemente (F2) über Abstützflächen (A3) hinausragende freie Enden (25) aufweist, die jeweils Ausrundungen (21) aufweisen und welche sich an den Zahnflanken der Zähne (13a, 14a) der Bremsscheibe (2) abstützen und mit dem Steg (6b) ein Abstützelement (22) verbunden ist, das zwischen den Zähnen (13, 14) der Radnabe (1) angeordnet ist.

11. Bremseinrichtung nach Anspruch 1 oder 10, **dadurch gekennzeichnet, daß** das Abstützelement (22) ausgerundete Enden (23) aufweist, die sich an den Zahnflanken der Zähne (13, 14) abstützen.

## Claims

1. Brake device comprising at least one brake disc (2) which can be displaced axially on a wheel hub (1), wherein the brake disc (2) has a toothing (3) which is arranged in a manner corresponding to a further toothing (4) of the wheel hub (2), and in each case a tooth gap is provided between the toothings (3) of the brake disc (2), radially acting spring elements (F; F1; F2) being held in a clamped manner in said tooth gaps, **characterized in that** the individual spring elements (F; F1; F2) consist of a sliding shoe with protruding legs (7, 8) which are held in a clamped manner in the tooth gap (9) between teeth (13a, 14a) of the brake disc (2) in an air supply channel (10), and a web (6; 6a; 6b) which joins the legs (7, 8) is oriented towards a tooth interspace (11) of the wheel hub (1) and/or towards a tooth gap (9) of the brake disc (2).

2. Brake device according to Claim 1, **characterized in that** the spring elements (F; F1; F2) are arranged in a manner distributed over the outer circumference of the wheel hub (1) or over the inner circumference of the brake disc (2), wherein in each case two spring elements (F; F1; F2) lie opposite one another in a plane (X-X, Y-Y).

3. Brake device according to Claim 1 or 2, **characterized in that** the legs (7, 8) of the spring elements (F; F1; F2) are arranged in a more or less central position with respect to the web (6; 6a; 6b) and are designed to be angled with respect to the latter so as to form a U-shape.

4. Brake device according to Claim 1, 2 or 3, **characterized in that** the free ends (15, 16) of the legs (7, 8) and the lateral longitudinal edges of the web (6; 6a; 6b) form rounded support surfaces (A1, A2, A3), wherein the legs (7, 8) are supported in a spring-loaded manner via the support surfaces (A1, A2) against inner walls of the air supply channels (10) of the brake disc (2) and the support surfaces (A3) of the web (6; 6a; 6b) are supported against the adjacent teeth (13a, 14a; 13, 14) of the brake disc (2) or wheel hub (1).

5. Brake device according to Claim 4, **characterized in that** the air supply channels (10) in the region of the support surfaces (A1, A2) are designed to become larger radially towards the outside.

6. Brake device according to Claim 1, 2, 3, 4 or 5, **characterized in that** the web (6) of the spring elements (F) has a surface (12) which is oriented towards the tooth interspace (11) of the wheel hub (1) and is curved in a concave manner in cross section, said surface bearing against the opposite edges of the toothing (13, 14) of the wheel hub (1).

7. Brake device according to Claim 6, **characterized in that** the edges of the toothing (13, 14) of the wheel hub (1) are provided with a radius.

8. Brake device according to Claim 1, 2, 3 or 4, **characterized in that** the web (6a) of the spring elements (F1) is convex and projects into the tooth gap (9) of the brake disc and bears there against the brake disc (1) and has rounded support surfaces (A3) at its side edges.

9. Brake device according to Claims 1 to 7, **characterized in that** the end edges (21, 22) of the web (6) are rounded up and over.

10. Brake device according to Claim 1, 2, 3 or 4, **characterized in that** the web (6b) of the spring elements (F2) has free ends (25) which protrude beyond support surfaces (A3), in each case have rounded portions (21) and are supported against the tooth flanks of the teeth (13a, 14a) of the brake disc (2), and a support element (22) is connected to the web (6b), said support element being arranged between the teeth (13, 14) of the wheel hub (1).

11. Brake device according to Claim 1 or 10, **characterized in that** the support element (22) has rounded ends (23) which are supported against the tooth flanks of the teeth (13, 14).

## Revendications

1. Dispositif de freinage comportant au moins un disque de frein (2) pouvant coulisser axialement sur un moyeu de roue (1), le disque de frein (2) comportant une denture (3) qui est disposée en correspondance d'une autre denture (4) du moyeu de roue (2) et entre les dentures (3) du disque de frein (2) étant prévus des entredents dans lesquels des éléments de ressort (F ; F1 ; F2), agissant radialement, sont maintenus coincés, **caractérisé en ce que** les différents éléments de ressort (F ; F1 ; F2) sont constitués d'un patin avec des branches (7, 8) saillantes qui sont maintenues coincées dans les entredents (9) entre des dents (13a, 14a) du disque de frein (2) dans un canal de guidage d'air (10), et une traverse (6, 6a, 6b), reliant les branches (7, 8), est tournée vers un interstice de dents (11) du moyeu de roue (1) et/ou un entredent (9) du disque de frein (2).

2. Dispositif de freinage selon la revendication 1, **caractérisé en ce que** les éléments de ressort (F ; F1 ; F2) sont disposés répartis sur le pourtour extérieur du moyeu de roue (1) ou sur le pourtour intérieur du disque de frein, deux éléments de ressort (F ; F1 ; F2) se faisant face dans un plan (X-X, Y-Y).

3. Dispositif de freinage selon la revendication 1 ou 2, **caractérisé en ce que** les branches (7, 8) des éléments de ressort (F ; F1 ; F2) sont disposées sensiblement au milieu de la traverse (6 ; 6a ; 6b) et sont réalisées coudées par rapport à celle-ci pour donner une forme en U.

4. Dispositif de freinage selon les revendications 1, 2 ou 3, **caractérisé en ce que** les extrémités libres (15, 16) des branches (7, 8) et les bords longitudinaux des côtés de la traverse (6 ; 6a ; 6b) forment des surfaces d'appui (A1, A2, A3) arrondies, les branches (7, 8) prenant appui de manière élastique et avec contrainte, par les surfaces d'appui (A1, A2), contre des parois intérieures des canaux de guidage d'air (10) du disque de frein (2), et les surfaces d'appui (A3) de la traverse (6 ; 6a ; 6b), contre les dents (13a, 14a ; 13, 14) voisines du disque de frein (2), respectivement du moyeu de roue (1).

5. Dispositif de freinage selon la revendication 4, **caractérisé en ce que** les canaux de guidage d'air (10) sont réalisés dans la zone des surfaces d'appui (A1, A2) de manière à s'agrandir radialement vers l'extérieur.

6. Dispositif de freinage selon les revendications 1, 2, 3, 4 ou 5, **caractérisé en ce que** la traverse (6) des éléments de ressort (F) présente une surface (12) orientée vers l'interstice de dents (11) du moyeu de roue (1) et concave dans sa section transversale, qui s'applique contre les bords opposés de la denture (13, 14) du moyeu de roue (1).

7. Dispositif de freinage selon la revendication 6, **caractérisé en ce que** les bords de la denture (13, 14) du moyeu de roue (1) présentent un rayon.

8. Dispositif de freinage selon les revendications 1, 2, 3 ou 4, **caractérisé en ce que** la traverse (6a) des éléments de ressort (F1) est réalisée convexe et s'engage à l'intérieur des entredents (9) du disque de frein (1) et s'y applique contre le disque de frein (1), et présente des surfaces d'appui (A3) arrondies sur ses bords latéraux.

9. Dispositif de freinage selon les revendications 1 à 7, **caractérisé en ce que** les bords terminaux (21, 22) de la traverse (6) se terminent arrondis vers le haut.

10. Dispositif de freinage selon les revendications 1, 2, 3 ou 4, **caractérisé en ce que** la traverse (6b) des éléments de ressort (F2) présente des extrémités libres (25) s'étendant au-delà des surfaces d'appui (A3), qui présentent chacune des parties arrondies (21) et qui prennent appui contre les flancs des dents (13a, 14a) du disque de frein (2), et à la traverse (6b) est relié un élément d'appui (22) qui est disposé entre les dents (13, 14) du moyeu de roue (1).

11. Dispositif de freinage selon la revendication 1 ou 10, **caractérisé en ce que** l'élément d'appui (22) présente des extrémités (23) arrondies qui prennent appui contre les flancs des dents (13, 14).
